(19) Europäisches Patentamt
European Patent Office
Office européen des brevets

(11) **EP 2 887 538 B1**

(12) **EUROPÄISCHE PATENTSCHRIFT**

(45) Veröffentlichungstag und Bekanntmachung des Hinweises auf die Patenterteilung:
**16.03.2016 Patentblatt 2016/11**

(51) Int Cl.:
***H02P 21/14*** *(2006.01)*   ***H02P 23/03*** *(2006.01)*

(21) Anmeldenummer: **13005976.9**

(22) Anmeldetag: **20.12.2013**

(54) **Verfahren zur Steuerung und Regelung einer elektromagnetischen Maschine**

Method for controlling and regulating an electromagnetic machine

Procédé de commande et de régulation d'une machine électromagnétique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**24.06.2015 Patentblatt 2015/26**

(73) Patentinhaber: **Baumüller Nürnberg GmbH**
**90482 Nürnberg (DE)**

(72) Erfinder: **Uhrin, Rastislav**
**21047 Saronno (VA) (IT)**

(74) Vertreter: **FDST Patentanwälte**
**Nordostpark 16**
**90411 Nürnberg (DE)**

(56) Entgegenhaltungen:
- HOLTZ J ET AL: "Drift- and parameter-compensated flux estimator for persistent zero-stator-frequency operation of sensorless-controlled induction motors", IEEE TRANSACTIONS ON INDUSTRY APPLICATIONS, IEEE SERVICE CENTER, PISCATAWAY, NJ, US, Bd. 39, Nr. 4, 1. Juli 2003 (2003-07-01), Seiten 1052-1060, XP011098898, ISSN: 0093-9994, DOI: 10.1109/TIA.2003.813726
- HOLTZ J ET AL: "Sensorless vector control of induction motors at very low speed using a nonlinear inverter model and parameter identification", CONFERENCE RECORD OF THE 2001 IEEE INDUSTRY APPLICATIONS CONFERENCE. 36TH IAS ANNUAL MEETING . CHICAGO, IL, SEPT. 30 - OCT. 4, 2001; [CONFERENCE RECORD OF THE IEEE INDUSTRY APPLICATIONS CONFERENCE. IAS ANNUAL MEETING], NEW YORK, NY : IEEE, US, 30. September 2001 (2001-09-30), Seite 2614, XP032143077, DOI: 10.1109/IAS.2001.955988 ISBN: 978-0-7803-7114-9

## Beschreibung

Die Erfindung betrifft ein Verfahren zur Steuerung und Regelung einer Asynchronmaschine, welche einen Rotor und einen Stator umfasst, wobei elektromagnetische Zustandsgrößen der Asynchronmaschine mittels eines mathematischen Modells in Raumzeigerdarstellung ermittelt werden, wobei ein Istwert des Zeigers des Stromes am Stator gemessen wird, und wobei ein Schätzwert eines Zeigers des magnetischen Flusses am Stator ermittelt wird. Die Erfindung betrifft ferner eine Asynchronmaschine.

Bei einer Asynchronmaschine, für welche nur eine Regelung der Geschwindigkeit benötigt wird, kann es von Vorteil sein, diese ohne einen Geschwindigkeitssensor zu regeln. Ein Reglungssystem ohne Rückkopplung eines Geschwindigkeitssignafs ist günstiger, einfacher und robuster. In diesem Fall muss die Regelung die Geschwindigkeit aus einer oder mehreren anderen gemessenen Größen, beispielsweise Statorströmen und/oder Spannungen sowie einem Schaltmodell für den Motor, errechnen. Wird eine feldorlentierte Regelung verwendet, benötigt man über die Geschwindigkeit hinaus auch den Wert und die Richtung des magnetischen Flusses. Die drei genannten Größen können durch einen so genannten Beobachter ermittelt werden. Hierbei kann es sich um komplexe schätztheoretisehe Modelle, oder auch um eine direkte Berechnung basierend auf der Induktionsspannung des Motors handeln.

Eine derartige Regelung ist aus Holtz, J. und Quan, J.: "Drift- and parametercompensated flux estimator for persistant zero-stator-frequency operation of sensorless-controlled induction motors", IEEE Transactions on Industry Applications 2003, Vol- 39, Issue 4, bekannt. Hier wird die Induktionsspannung integriert, um so den Statorfluss zu ermitteln. Da eine reine Integration in der Anwesenheit eines Offsets in der Messung von Strömen oder in der Spannungserzeugung notwendigerweise gegen unendlich divergieren würde, ist im integranden der Induktionsspannung ein Korrekturterm hinzugefügt, um im genannten Fall ein Divergieren und einen damit verbundenen Verlust der Regelung zu verhindern. Dieser Korrekturterm wird gebildet durch die verstärkte Abweichung zwischen einem geschätzten Fluss und einem Sollwert für einen Referenzfluss. In Holtz, J und Quan, J.: "Sensorless vercotr control of induction motors at very low speed using a nonlinear inverter model and parameter identification", Conference record of the IEEE industry applications conference. 36th IAS annual meeting, Chicago, IL, 30.9.-4.10.2001, Bd. 4, Seiten 2614-262, wird für eine solche Regelung zum Schätzen der Induktionsspannung ein Modell eines Pulswecheslrichters herangezogen, welcher die Statorwicklungen jeweils mit Spannung versorgt.

Eine Asynchronmaschine kann als Motor und als Generator betrieben werden. Im motorischen Betrieb ist das Verhalten der beschriebenen Regelung über den gesamten Geschwindigkeitsbereich weitgehend stabil.

Im generatorischen Betrieb bei niedrigen Drehzahlen werden jedoch der magnetische Fluss und die Geschwindigkeit nicht korrekt geschätzt, was zu einer Instabilität der Regelung in diesem Betriebsbereich führt. Dies kann beispielsweise bei einer Seilwinde auftreten, welche von der Asynchronmaschine angetrieben wird, und über diese beim Absenken einer Last Energie an eine Stromquelle zurückspelst. Beim Übergang vom motorischen in den generatorischen Betrieb - also beim Übergang vom Anheben zum Absenken der Last - kann hierbei ein Kontrollverlust über die Regelung dazu führen, dass die Geschwindigkeit des Absenkvorganges systematisch zu niedrig geschätzt wird, und die Last praktisch frei fallend beschleunigen kann.

Dieses Problem ist jedoch nicht auf diese konkrete Regelung beschränkt, sondern vielmehr ein allgemeines Phänomen in der Regelungstechnik von Asynchronmaschinen unter den genannten Voraussetzungen, Diesem Problem kann mit einer Erhöhung der mathematischen Komplexität der Regelung begegnet werden, beispielsweise durch die Verwendung eines adaptiven vollständigen Beobachters oder eines Kalman-Filters. Eine derartige Erhöhung der mathmatischen Komplexität kann zwar das Problem des Kontrollverlustes über die Regelung bei niedrigen Drehzahlen im Generatorbetreib beheben, bedarf aber hierzu sehr aufwändiger Berechnungen, wozu ein leistungsstarker Prozessor benötigt wird. Dies kann im Einzelfall unerwünscht sein.

Es ist Aufgabe der Erfindung, ein Verfahren zur Regelung einer Asynchronmaschine anzugeben, welches ohne die direkte Messung der Geschwindigkeit auskommt, mathematisch möglichst einfach zu implementieren ist und sowohl im Motor- als auch im Generatorbetrieb über den angestrebten Drehzahlbereich der Asynchronmaschine möglichst stabil ist. Es ist ferner Aufgabe der Erfindung, eine Asynchronmaschine anzugeben, welche sowohl im Motor- als auch im Generatorbetrieb über ihren angestrebten Drehzahlbereich möglichst stabil regelbar ist.

Die erstgenannte Aufgabe durch Anspruch 1 gelöst.

Der drehmomentbildende Anteil des Stromes am Stator kann hierbei insbesondere als der Imaginärteil des Stromes im mitrotiererenden Bezugssystem ermittelt werden, welcher sich ergibt aus dem Zeiger des gemessenen Stromes am Stator, rotiert um den negativen geschätzten Phasenwinkel,

Die Erfindung geht dabei zunächst von der Überlegung aus, dass eine Regelung nach Stand der Technik im niedrigen Drehzahlbereich für generatorischen Betrieb instabil wird, und In allen anderen Betriebsbereichen Im Wesentlichen unproblematisch Ist. Sollte es somit gelingen, in der Regelung den instabilen Betriebsbereich einfach und sicher zu identifizieren, um die Regelung hier möglichst effizient anzupassen, und an sonsten keine Veränderungen vorzunehmen, kann auf aufwändige Messungen oder auf komplexe mathematische Verfahren verzichtet werden.

Diese Identifikation erfolgt nun über den drehmomentbildenden Anteil des Stromes am Stator. Diese Größe ist zur Prüfbedingung für den kritischen Betriebsbereich besonders gut geeignet, da hier mit dem Istwert des Zeigers des Stromes am Stator eine direkte Messgröße eingeht. Mit dem u.a. hieraus im Weiteren ermittelten Phasenwinkel geht eine geschätzte Größe in den drehmomentbildenden Anteil ein, welcher mit dem Schätzwert der Drehfeldfrequenz verglichen wird. Ausgehend von einer stabilen Regelung für den gesamten Drehzahlbereich im motorischen Betrieb und damit verbundene Zuverlässigkeit der Schätzwerte ist somit gerade beim besonders kritischen Übergang in den generatorischen Betrieb die Funktionalität der Prüfbedingung gewährleistet, da die Abweichung der realen Werte des Phasenwinkels und der Drehfeldfrequenz von den für die Prüfbedingung verwendeten Schätzwerten als gering angesehen werden kann.

Zusätzlich stabilisierend wirkt bei diesem Übergang die Tatsache, dass nur die Vorzeichen des drehmomentbildenden Stromanteils und des Schätzwertes der Drehfeldfrequenz verglichen werden. Ein Fehler im drehmomentbildenden Stromanteil, welcher beispielsweise aus einer Abweichung des geschätzten Phasenwinkels vom realen Wert resultieren kann, kann bei hinreichend großem Drehmoment so weit kompensiert werden, dass das Vorzeichen durch den Fehler nicht beeinflusst wird. Der Schätzwert der Drehfeldfrequenz kann, wie erwähnt, im Motorbetrieb als zuverlässig betrachtet werden. Somit kann ein Schätzfehler beim kritischen Übergang in den generatorischen Betrieb allenfalls zu einer leicht verspäteten Hinzumultiplikation des Faktors zur Korrekturspannung führen.

Eine zentrale Idee zur Funktionsweise der Erfindung kann nun anhand folgender physikalischer Überlegung erklärt werden: Die Induktionsspannung ist die zeitliche Ableitung des Magnetflusses. Dies bedeutet insbesondere, dass der Phasenwinkel der Induktionsspannung von der Änderung des Phasenwinkels des Magnetflusses, also von der Drehfeldfrequenz, abhängt. Bei einem Übergang vom motorischen in den generatorischen Betrieb bei gleichzeitiger Umkehr der Rotationsrichtung findet eine Änderung des Drehsinns und mithin ein Nulldurchgang der Drehfeldfrequenz statt. Hierbei geht der Induktionsspannung kurzzeitig die Phasenreferenz verloren, welche ihr durch die Rotation des Drehfeldes gegeben war. Die Korrekturspannung, welche in erster Linie einer Abeichung des geschätzten Verhaltens der Asynchronmaschine von einem erwünschten Verhalten Rechnung tragen soll, kann über den hinzumultiplizierten Faktor diese Phasenrelation wieder herstellen.

Als vorteilhaft erweist es sich hierbei, wenn als der Korrekturspannung hinzumultiplizierter Faktor ein Phasenfaktor der Form $e^{i\gamma}$ verwendet wird. Die Regelung selbst Ist im motorischen Betrieb und im generatorischen Betrieb bei höheren Drehzahlen stabil. Nur der generatorische Betrieb bei niedrigen Drehzahlen, insbesondere der bereits genannte Übergang in den generatorischen Betrieb, sind als kritisch anzusehen. Ein Phasenfaktor vom Betrag 1 ist hierbei besonders gut geeignet, "minimalInvasiv" die erwähnte Phasenrelation für den magnetischen Fluss wiederherzustellen.

Bevorzugt wird der Phasenwinkel $\gamma$ im Phasenfaktor $e^{i\gamma}$ für einen verschwindenden Schätzwert der Drehfeldfrequenz als $\pi/2$ gewählt und nimmt mit stelgendem Absolutbetrag des Schätzwertes der Drehfeldfrequenz monoton ab. Hierbei wird von folgender Überlegung ausgegangen: Der Schätzwert des Zeigers des magnetischen Flusses wird ermittelt aus den Zeigern der Korrekturspannung und der Induktionsspannung. Im stationären Fall, also bei konstanten Beträgen und Frequenzen, ist die Induktionsspannung orthogonal zum magnetischen Fluss. Betrachtet man den Übergang in den generatorischen Betrieb nicht dynamisch, sondern als eine kleine Störung des statischen Falles, so wird, vereinfacht gesagt, durch eine Wahl von $\pi/2$ für den Phasenfaktor $\gamma$ der Korrekturspannung die Phasenrelation zum magnetischen Fluss gegeben, welche die Induktionsspannung im ungestörten stationären Fall hätte. Die Korrekturspannung korrigiert somit also die Induktionsspannung im Sinne einer quasi-stationären Lösung. Mit zunehmendem Absolutbetrag der Drehfeldfrequenz bei generatorischem Betrieb gerät die Asynchronmaschine In einen Betriebsbereich, in welchem auch eine Regelung nach Stand der Technik wieder weitgehend stabil ist. Somit kann mit zunehmender Drehfeldfrequenz auch im generatorischen Betrieb auf den Phasenfaktor $\gamma$ verzichtet werden.

Eine Möglichkeit hierfür ist es, dass der Phasenwinkel $\gamma$ im Phasenfaktor $e^{i\gamma}$ vom Schätzwert der Drehfeldfrequenz eine durch

$$\gamma = \frac{\pi}{2}\frac{c-|\omega_s|}{c} \text{ für } 0 \leq |\omega_s| \leq c,$$

$$\gamma = 0 \text{ für } |\omega_s| > c$$

gegebene funktionale Abhängigkeit aufweist, wobei $\omega_s$ die Drehfeldfrequenz bezeichnet und $c$ ein vorgegebener Schwellwert ist. Dies bedeutet, dass der Korrekturspannung direkt beim Übergang vom motorischen in den generatorischen Betrieb der Phasenfaktor $e^{i\gamma}$ mit dem Phasenwinkel $\gamma = \pi/2$ hinzumultipliziert wird, und der Phasenwinkel $\gamma$ mit zunehmender Drehfeldfrequenz $\omega_s$ linear abnimmt und bei einem Schwellwert $c$ verschwindet, so dass der Phasenfaktor $e^{\epsilon\gamma}$ ab dem Schwellwert $c$ gleich 1 bleibt. Dieser Schwellwert kann hierbei durch einen Motorparameter gewählt werden, beispielsweise durch einen Anteil der synchronen Motorfrequenz oder einen Anteil der maximalen Frequenz, für die die Maschine mechanisch maximal ausgelegt ist.

Alternativ dazu kann der Phasenwinkel $\gamma$ mit steigendem Absolutbetrag des Schätzwertes der Drehfeldfrequenz asymptotisch gegen Null gehen. Dies kann beispielsweise durch funktionale Implementierung einer exponentiellen Abnahme oder auch einer Lorentz-Linie erfolgen, Die Halbwertszeit bzw. die Linienbreite kann hierbei durch Motorparameter wie einen einen Anteil der synchronen Motor-frequenz oder einen Anteil der maximalen Frequenz, für die Asynchronmaschine mechanisch maximal ausgelegt ist, gewählt werden. Eine asymptotische Abnahme des Phasenwinkels $\gamma$ hat den Vorteil, dass keine weitere Prüfung einer Bedingung für die Drehfeldfrequenz erforderlich ist.

Bevorzugt wird der Zeiger der Induktionsspannung aus dem Sollwert für den Zeiger der Stellspannung abzüglich des Produktes aus dem Statorwiderstand und einer aus dem Istwert des Zeigers des Stromes abgeleiteten Stromgröße ermittelt, also

$$ E_{\alpha\beta} = V_{\alpha\beta}^{*} - i\big(I_{\alpha\beta}\big)\cdot R_s \, , $$

wobei $E_{\alpha\beta}$ den Zeiger der Induktionsspannung, $V_{\alpha\beta}^{*}$ den Zeiger der Stellspannung, $i(I_{\alpha\beta})$ eine aus dem Zeiger des Stromes $I_{\alpha\beta}$ abgeleitete Stromgröße und $R_s$ den Statorwiderstand bezeichnen. Insbesondere kann die Stromgröße $i(I_{\alpha\beta})$ auch durch den Istwert des Zeigers des Stromes $I_{\alpha\beta}$ selbst gebildet werden, oder durch eine Schätzung einer Entwicklung des Zeigers des Stromes auf Basis eines Messwertes des Zeigers des Stromes $I_{\alpha\beta}$.

Der angegebene funktionale Zusammenhang gibt ein geläufiges Modell einer auf elektromagnetischer Induktion basierenden Maschine wieder. Insbesondere kann hierbei der Statorwiderstand nur approximativ bekannt sein. Dies kann der Fall sein, wenn der Statorwiderstand im Betrieb der Maschine abhängig von den Betriebsbedingungen ist und beispielsweise mit zunehmender Temperatur ansteigt. Wird der Widerstand im Betrieb nicht gemessen, geht in die Regelung eine feste Größe ein, welche eine Abschätzung an den - unbekannten - realen Wert darstellt.

Günstigerweise wird der Schätzwert des Zeigers des magnetischen Flusses durch Integration der Summe aus den Zeigern der Korrekturspannung und der Induktionsspannung ermittelt, also

$$ \varphi_{\alpha\beta}^{s} = \int dt \left( V_{\alpha\beta}^{c} + E_{\alpha\beta} \right), $$

wobei $\varphi_{\alpha\beta}^{s}$ den Zeiger des magnetischen Flusses und $V_{\alpha\beta}^{c}$ den Zeiger der Korrekturspannung bezeichnen. Insbesondere kann hierbei dem Zeiger der Korrekturspannung ein Faktor, insbesondere ein Phasenfaktor $e^{i\gamma}$, hinzumultipliziert werden, wenn der drehmomentbildende Anteil des Stromes am Stator ein zum Schätzwert der

Drehfeldfrequenz $\omega_s$ entgegengesetztes Vorzeichen aufweist, also

$$ \varphi_{\alpha\beta}^{s} = \int dt \left( e^{i\gamma} \cdot V_{\alpha\beta}^{c} + E_{\alpha\beta} \right) \text{ für } i_q \cdot \omega_s < 0. $$

Nach dem Induktionsgesetz ist die Induktionsspannung die zeitliche Ableitung des magnetischen Flusses. Die Korrekturspannung $V_{\alpha\beta}^{c}$ kann nun so gewählt sein, dass sie ein Divergieren der obigen Integration des Induktionsgesetzes verhindert, falls ein konstanter Offset, beispielsweise in der Messung des Stromes am Stator, auftritt.

Zweckmäßigerweise wird der Schätzwert des Phasenwinkels $\theta_s$, als Phasenwinkel des Schätzwertes des Zeigers des magnetischen Flusses $\varphi_{\alpha\beta}^{s}$ ermittelt und der Schätzwert der Drehfeldfrequenz $\omega_s$ aus einer zeitlichen Änderung des Schätzwertes des Phasenwinkels $\theta_s$ abgeleitet. Dieser funktionale Zusammenhang gibt ein geläufiges Modell einer auf elektromagnetischer Induktion basierenden Maschine wieder. Insbesondere kann hierbei der Schätzwert der Drehfeldfrequenz auch aus einer zeitlichen Ableitung des Phasenwinkels oder aus einem diskreten Verfahren, welches im Grenzwert gegen eine zeitliche Ableitung des Phasenwinkels konvergiert, abgeleitet werden.

Als vorteilhaft erweist es sich, wenn ein Sollwert für den magnetischen Fluss vorgegeben wird, und dass der Zeiger der Korrekturspannung vorgegeben wird als

$$ V_{\alpha\beta}^{c} = G \cdot \left( e^{i\theta_s} \cdot \varphi_{d}^{*} - \varphi_{\alpha\beta}^{s} \right), $$

wobei $e^{i\theta_s}$ die dem Schätzwert des Phasenwinkels $\theta_s$ zugeordnete Phase, $\varphi_{d}^{*}$ ein Sollwert für den magnetischen Fluss und G ein reellwertiger Verstärkungsfaktor sind. Der Sollwert für den magnetischen Fluss kann dabei durch die Steuerung der gewünschten Drehzahl vorgegeben werden, und dann mittels der Phase $e^{i\theta_s}$ in statorfeste Koordinaten transformiert werden, um somit die Abweichung vom Schätzwert des Zeigers des magnetischen Flusses $\varphi_{\alpha\beta}^{s}$ zu bestimmen und den Schätzwert des Zeigers des magnetischen Flusses $\varphi_{\alpha\beta}^{s}$ entsprechend dieser Abweichung über die Korrekturspannung zu korrigieren.

Die zweitgenannte Aufgabe wird erfindungsgemäß durch Anspruch 10 gelöst.

Nachfolgend wird ein Ausführungsbeispiel der Erfindung anhand einer Zeichnung näher erläutert. Hiebei zeigt:

Fig. 1    In einem Flussdiagramm eine Regelung für eine elektromagnetische Maschine, und

FIG 2    einen Graphen einer möglichen funktionalen Abhängigkeit des Phasenwinkels $\gamma$ im Phasenfaktor $e^{j\gamma}$ der Korrekturspannung von der geschätzten Drehfeldfrequenz.

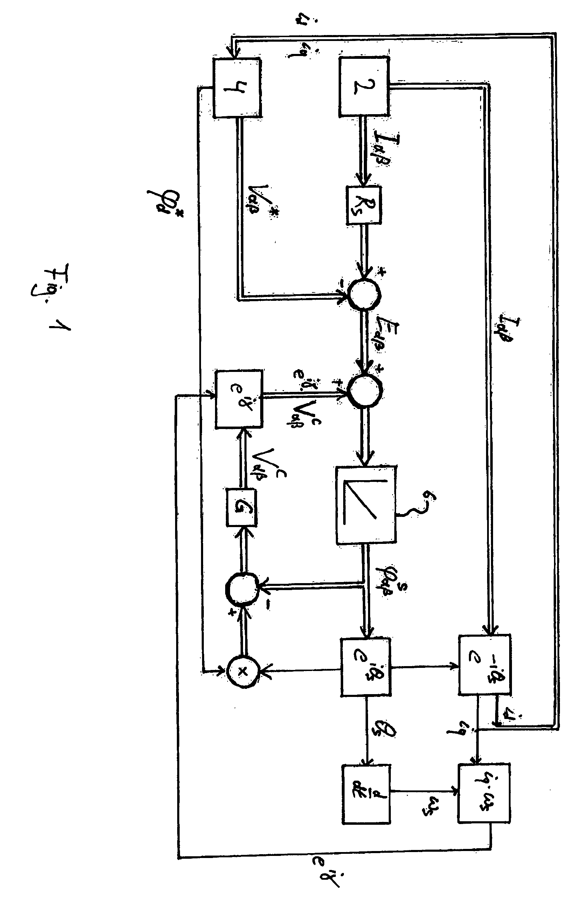

In Fig. 1 ist ein Flussdiagramm der Regelschleife 1 für eine elektromagnetische Maschine dargestellt. An einem in der Zeichnung nicht näher dargestellten Stator einer Asynchronmaschine misst eine Messeinheit 2 einen Statorstrom $I_{\alpha\beta}$. Von einer zentralen Drehzahlsteuerung 4 wird eine Stellspannung $V_{\alpha\beta}^{*}$ auf Basis der für den Betrieb gewünschten Drehzahl vorgegeben. Mit dem Statorwiderstand $R_s$ wird die Induktionsspannung $E_{\alpha\beta}$ berechnet als $E_{\alpha\beta} = V_{\alpha\beta}^{*} - I_{\alpha\beta} \cdot R_s$. Der Induktionsspannung $E_{\alpha\beta}$ wird eine Korrekturspannung $V_{\alpha\beta}^{c}$ hinzuaddiert. Gemäß dem Induktionsgesetz wird die Induktionsspannung $E_{\alpha\beta}$ zusammen mit der Korrekturspannung $V_{\alpha\beta}^{c}$ Im Integrator 6 zeitlich integriert, um so einen Schätzwert für den magnetischen Fluss $\varphi_{\alpha\beta}^{s}$ am Stator zu erhalten. Die zur Induktionsspannung $E_{\alpha\beta}$ hinzuaddierte Korrekturspannung $V_{\alpha\beta}^{c}$ erfüllt im Integranden die Funktion, das Integral im Falle eines konstanten Offsets, beispielsweise im Messwert des Statorstroms $I_{\alpha\beta}$, zu stabilisieren um ein Divergieren zu verhindern.

Der Schätzwert des magnetischen Flusses $\varphi_{\alpha\beta}^{s}$ kann aufgeteilt werden in einen Betrag $\left|\varphi_{\alpha\beta}^{s}\right|$ und eine Phase $e^{j\theta_s}$. Der Schätzwert des Phasenwinkels $\theta_s$ der Phase $e^{j\theta_s}$ wird zeitlich abgeleitet, um einen Schätzwert der Drehfeldfrequenz $\omega_s$ zu erhalten. Aus dem von der Messeinheit 2 gemessenen Statorstrom $I_{\alpha\beta}$ können durch eine Rücktransformation mit dem negativen Schätzwert des Phasenwinkels $\theta_s$ der feldbildende Anteil $i_d$ und der drehmomentbildende Anteil $i_q$ der Statorstromes als Real- bzw. Imaginärteil von $I_{\alpha\beta} \cdot e^{j\theta_s}$ ermittelt werden. Der feldbildende Anteil $i_d$ und der drehmomentbildende Anteil $i_q$ des Statorstromes werden an die zentrale Drehzahlsteuerung 4 zurückgegeben, wo die Größen in die Berechnung der Stellspannung $V_{\alpha\beta}^{*}$ eingehen.

Zur Ermittlung der Korrekturspannung $V_{\alpha\beta}^{c}$ wird von der zentralen Drehzahlsteuerung 4 ein Sollwert für den magnetischen Fluss $\varphi_{d}^{*}$ vorgegeben. Dieser wird über die geschätzte Phase $e^{j\theta_s}$ in die entsprechende Phasenlage am Stator transformiert, und hiervon der Schätzwert des magnetischen Flusses $\varphi_{\alpha\beta}^{s}$ subtrahiert. Das Resultat wird mit einem reellwertigen Verstärkungsfaktor G multipliziert.

Ist nun das Vorzeichen des Produktes aus dem drehmomentbildender Anteil $i_q$ des Statorstromes und dem Schätzwert der Drehfeldfrequenz $\omega_s$ positiv, wird der Wert $V_{\alpha\beta}^{c} = G \cdot \left(e^{j\theta_s} \cdot \varphi_{d}^{*} - \varphi_{\alpha\beta}^{s}\right)$ direkt als Korrekturspannung weitergegeben. Ist das Vorzeichen des Produktes aus dem drehmomentbildender Anteil $i_q$ des Statorstromes und dem Schätzwert der Drehfeldfrequenz $\omega_s$ negativ, wird dieser Korrekturspannung ein Phasenfaktor $e^{j\gamma}$ hinzumultipliziert.

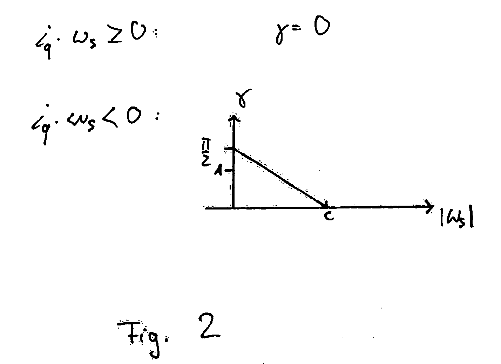

Eine mögliche funktionale Abhängigkeit des Phasenwinkels $\gamma$ in diesem Phasenfaktor $e^{j\gamma}$ vom Absolutbetrag der Drehfeldfrequenz $\omega_s$ ist in Fig. 2 näher dargestellt. Für $i_q \cdot \omega_s \geq 0$ ist die Korrekturspannung $V_{\alpha\beta}^{c}$ ohne den Phasenfaktor $e^{j\gamma}$ an den Integrator 6 auszugeben, was auch durch konstant $\gamma=0$ für diesen Fall formuliert werden kann. Für $i_q \cdot \omega_s < 0$ wird $\gamma$ für einen verschwindenden Wert von $|\omega_s|$ als $\gamma = \pi/2$ gewählt, Mit ansteigendem Wert von $|\omega_s|$ nimmt der Phasenwinkel $\gamma$ linear ab, bis er bei einem vorgegebenen Schwellwert $c$ für $|\omega_s|$, welcher beispielsweise durch einen Bruchteil der synchronen Frequenz der Asynchronmaschine gewählt sein kann, den Wert 0 annimmt. Bei Werten von $|\omega_s|$ oberhalb des vorgegebenen Schwellwertes $c$ verbleibt der Phasenwinkel $\gamma=0$.

Bezugszeichenliste

1    Regelschleife
2    Messeinheit
4    zentrale Drehzahlsteuerung
6    Integrator
$I_{\alpha\beta}$    Statorstrom
$V_{\alpha\beta}^{*}$    Stellspannung
$R_s$    Statorwiderstand
$E_{\alpha\beta}$    Induktionsspannung
$V_{\alpha\beta}^{c}$    Korrekturspannung
$\varphi_{\alpha\beta}^{s}$    Schätzwert des magnetischen Flusses
$e^{j\theta_s}$    Schätzwert der Phase des Drehfeldes
$\theta_s$    Schätzwert des Phasenwinkels des Drehfeldes
$\omega_s$    Schätzwert der Drehfeldfrequenz
$i_d$    feldbildender Anteil des Statorstromes
$i_q$    drehmomentbildender Anteil des Statorstromes
$\varphi_{d}^{*}$    Sollwert für den magnetischen Fluss
$G$    Verstärkungsfaktor
$e^{j\gamma}$    Phasenfaktor der Korrekturspannung
$\gamma$    Phasenwinkel
$c$    Schwellwert

**Patentansprüche**

1. Verfahren zur Steuerung und Regelung einer Asynchronmaschine, welche einen Rotor und einen Stator umfasst,
wobei elektromagnetische Zustandsgrößen der Asynchronmaschine mittels eines mathematischen Modells in Raumzeigerdarstellung ermittelt werden, wobei durch eine Drehzahlsteuerung (4) ein Sollwert für den Zeiger einer Stellspannung $\left( V_{\alpha\beta}^{*} \right)$ am Stator vorgegeben wird,
wobei ein Istwert des Zeigers des Stromes ($I_{\alpha\beta}$) am Stator gemessen wird, wobei aus dem Sollwert für den Zeiger der Stellspannung $\left( V_{\alpha\beta}^{*} \right)$ und dem Istwert des Zeigers des Stromes ($I_{\alpha\beta}$) ein Zeiger einer Induktionsspannung ($E_{\alpha\beta}$) ermittelt wird,
wobei ein Zeiger einer Korrekturspannung $\left( V_{\alpha\beta}^{c} \right)$ vorgegeben wird,
wobei aus den Zeigern der Korrekturspannung $\left( V_{\alpha\beta}^{c} \right)$ und der Induktionsspannung ($E_{\alpha\beta}$) ein Schätzwert eines Zeigers des magnetischen Flusses $\left( \varphi_{\alpha\beta}^{s} \right)$ am Stator ermittelt wird,
wobei der Schätzwert des Zeigers des magnetischen Flusses $\left( \varphi_{\alpha\beta}^{s} \right)$ am Stator für die Vorgabe des Zeigers der Korrekturspannung $\left( V_{\alpha\beta}^{c} \right)$ herangezogen wird, und wobei aus dem Schätzwert des Zeigers des magnetischen Flusses $\left( \varphi_{\alpha\beta}^{s} \right)$ ein Schätzwert eines Phasenwinkels ($\theta_s$) und ein Schätzwert einer Drehfeldfrequenz ($\omega_s$) ermittelt werden,
**dadurch gekennzeichnet,**
**dass** dem Zeiger der Korrekturspannung $\left( V_{\alpha\beta}^{c} \right)$ ein phasenverändernder Faktor *(e$^{i\gamma}$)* hinzumultipliziert wird, wenn ein drehmomentbildender Anteil eines Stromes ($i_q$) am Stator ein zum Schätzwert der Drehfeldfrequenz ($\omega_s$) entgegengesetztes Vorzeichen aufweist, wobei der drehmomentbildende Anteil des Stromes ($i_q$) am Stator aus dem gemessenen Istwertes des Zeigers des Stromes ($I_{\alpha\beta}$) und dem geschätzten Phasenwinkel ($\theta_s$) ermittelt wird.

2. Verfahren nach Anspruch 1,
**dadurch gekennzeichnet,**
**dass** als der Korrekturspannung $\left( V_{\alpha\beta}^{c} \right)$ hinzumultiplizierter Faktor ein Phasenfaktor (e$^{i\gamma}$) der Form e$^{i\gamma}$ verwendet wird.

3. Verfahren nach Anspruch 2,
**dadurch gekennzeichnet,**
**dass** der Phasenwinkel $\gamma$ im Phasenfaktor (e$^{i\gamma}$) für einen verschwindenden Schätzwert der Drehfeldfrequenz ($\omega_s$) als $\pi/2$ gewählt wird und mit steigendem Absolutbetrag des Schätzwertes der Drehfeldfrequenz ($\omega_s$) monoton abnimmt.

4. Verfahren nach Anspruch 3,
**dadurch gekennzeichnet,**
**dass** der Phasenwinkel $\gamma$ im Phasenfaktor (e$^{i\gamma}$) vom Schätzwert der Drehfeldfrequenz ($\omega_s$) eine durch

$$\gamma = \frac{\pi}{2}\frac{c - |\omega_s|}{c} \text{ für } 0 \le |\omega_s| \le c,$$

$$\gamma = 0 \text{ für } |\omega_s| > c$$

gegebene funktionale Abhängigkeit aufweist, wobei *c* ein vorgegebener Schwellwert ist.

5. Verfahren nach Anspruch 3,
**dadurch gekennzeichnet,**
**dass** der Phasenwinkel $\gamma$ mit steigendem Absolutbetrag des Schätzwertes der Drehfeldfrequenz ($\omega_s$) asymptotisch gegen Null geht.

6. Verfahren nach einem der vorhergehenden Ansprüche,
**dadurch gekennzeichnet,**
**dass** der Zeiger der Induktionsspannung ($E_{\alpha\beta}$) aus dem Sollwert für den Zeiger der Stellspannung $\left( V_{\alpha\beta}^{*} \right)$ abzüglich des Produktes aus dem Statorwiderstand ($R_s$) und einer aus dem Istwert des Zeigers des Stromes ($I_{\alpha\beta}$) abgeleiteten Stromgröße ermittelt wird.

7. Verfahren nach einem der vorhergehenden Ansprüche,
**dadurch gekennzeichnet,**
**dass** der Schätzwert des Zeigers des magnetischen Flusses $\left( \varphi_{\alpha\beta}^{s} \right)$ durch Integration der Summe aus den Zelgern der Korrekturspannung $\left( V_{\alpha\beta}^{c} \right)$ und der Induktlonsspannung ($E_{\alpha\beta}$) ermittelt wird.

8. Verfahren nach einem der vorhergehenden Ansprüche,
**dadurch gekennzeichnet,**
**dass** der Schätzwert des Phasenwinkels ($\theta_s$) als Phasenwinkel des Schätzwertes des Zeigers des magnetischen Flusses $\left( \varphi_{\alpha\beta}^{s} \right)$ ermittelt wird, und der Schätzwert der Drehfeldfrequenz ($\omega_s$) aus einer zeitlichen Änderung des Schätzwertes des Phasenwinkels ($\theta_s$) abgeleitet wird.

**9.** Verfahren nach einem der vorhergehenden Ansprüche,
**dadurch gekennzeichnet,**
**dass** durch die Drehzalsteuerung (4) ein Sollwert für den magnetischen Fluss $\left(\varphi_d^*\right)$ vorgegeben wird, und dass der Zeiger der Korrekturspannung $\left(V_{\alpha\beta}^c\right)$ vorgegeben wird als

$$V_{\alpha\beta}^c = G \cdot \left(e^{i\theta_s} \cdot \varphi_d^* - \varphi_{\alpha\beta}^s\right),$$

wobei $\varphi_{\alpha\beta}^s$ der Schätzwert des Zeigers des magnetischen Flusses $\left(\varphi_{\alpha\beta}^s\right)$, $e^{i\theta_s}$ die dem Schätzwert des Phasenwinkels ($\theta_s$) zugeordnete Phase, und $G$ ein reellwertiger Verstärkungsfaktor ist.

**10.** Asynchronmaschine, umfassend einen Rotor, einen Stator, eine Messeinheit (2) zur Messung eines Stromes ($I_{\alpha\beta}$) am Stator, und eine Steuereinheit, welche dazu eingerichtet ist, das Verfahren nach einem der vorhergehenden Ansprüche durchzuführen.

**Claims**

**1.** Method for the control and regulation of an asynchronous machine which comprises a rotor and a stator, wherein electromagnetic state variables of the asynchronous machine are determined by means of a mathematical model in space vector representation, wherein a target value for the vector of a manipulated voltage ($V^*_{\alpha\beta}$) on the stator is predetermined by speed regulation (4), wherein an actual value of the vector of the current ($I_{\alpha\beta}$) on the stator is measured, wherein a vector of an induction voltage ($E_{\alpha\beta}$) is determined from the target value for the vector of the manipulated voltage ($V^*_{\alpha\beta}$) and the actual value of the vector of the current ($I_{\alpha\beta}$), wherein a vector of a correction voltage ($V^c_{\alpha\beta}$) is predetermined, wherein an estimated value of a vector of the magnetic flux ($\varphi^s\alpha\beta$) on the stator is determined from the vectors of the correction voltage ($V^c\alpha\beta$) and the induction voltage ($E_{\alpha\beta}$), wherein the estimated value of the vector of the magnetic flux ($\varphi^s\alpha\beta$) on the stator is used for the specification of the vector of the correction voltage ($V^c\alpha\beta$), and wherein an estimated value of a phase angle ($\theta_s$) and an estimated value of a rotating field frequency ($\omega_s$) are determined from the estimated value of the vector of the magnetic flux ($\varphi^s\alpha\beta$),
**characterised in that**
a phase-shifting factor ($e^{i\gamma}$) is included in the multiplication of the vector of the correction voltage ($V^c\alpha\beta$) if a torque-forming proportion of a current ($i_q$) on the stator has an opposite mathematical sign to the estimated value of the rotating field frequency ($\omega_s$), wherein the torque-forming proportion of the current ($i_q$) on the stator is determined from the measured actual value of the vector of the current ($I_{\alpha\beta}$) and the estimated phase angle ($\theta_s$).

**2.** Method according to claim 1,
**characterised in that**
a phase factor ($e^{i\gamma}$) of the form $e^{i\gamma}$ is used as the factor included in the multiplication of the correction voltage ($V^c_{\alpha\beta}$).

**3.** Method according to claim 2,
**characterised in that**
the phase angle $\gamma$ in the phase factor ($e^{i\gamma}$) is selected for a vanishing estimated value of the rotating field frequency ($\omega_s$) as $\pi/2$ and reduces monotonously with increasing absolute value of the estimated value of the rotating field frequency ($\omega_s$).

**4.** Method according to claim 3,
**characterised in that**
the phase angle $\gamma$ in the phase factor ($e^{i\gamma}$) from the estimated value of the rotating field frequency ($\omega_s$) has a functional dependency given by:

$$\gamma = \frac{\pi}{2}\frac{c - |\omega_s|}{c} \quad \text{for} \quad 0 \leq |\omega_s| \leq c,$$

$$\gamma = 0 \quad \text{for} \quad |\omega_s| > c$$

wherein c is a predetermined threshold value.

**5.** Method according to claim 3,
**characterised in that**
the phase angle $\gamma$ goes asymptotically towards zero with increasing absolute value of the estimated value of the rotating field frequency ($\omega_s$).

**6.** Method according to one of the preceding claims,
**characterised in that**
the vector of the induction voltage ($E_{\alpha\beta}$) is determined from the target value for the vector of the manipulated voltage ($V^*_{\alpha\beta}$) minus the product of the stator resistance ($R_s$) and a current variable derived from the actual value of the vector of the current ($I_{\alpha\beta}$).

**7.** Method according to one of the preceding claims,
**characterised in that**
the estimated value of the vector of the magnetic flux ($\varphi^s\alpha\beta$) is determined by integration of the sum of the vectors of the correction voltage ($V^c\alpha\beta$) and the in-

duction voltage ($E_{\alpha\beta}$).

8. Method according to one of the preceding claims, **characterised in that** the estimated value of the phase angle ($\theta_s$) is determined as the phase angle of the estimated value of the vector of the magnetic flux ($\varphi^s{}_{\alpha\beta}$), and the estimated value of the rotating field frequency ($\omega_s$) is derived from a temporal change in the estimated value of the phase angle ($\theta_s$).

9. Method according to one of the preceding claims, **characterised in that** a target value for the magnetic flux ($\varphi^s\alpha\beta$) is predetermined by speed regulation (4) and the vector of the correction voltage ($V^c{}_{\alpha\beta}$) is predetermined as

$$V_{\alpha\beta}^c = G \cdot \left( e^{i\theta_s} \cdot \varphi_{rl}^* - \varphi_{\alpha\beta}^s \right),$$

wherein $\varphi^s{}_{\alpha\beta}$ is the estimated value of the vector of the magnetic flux ($\varphi^s{}_{\alpha\beta}$), $e^{10s}$ is the phase allocated to the estimated value of the phase angle ($\theta_s$), and G is a real-valued amplification factor.

10. Asynchronous machine comprising a rotor, a stator, a measuring unit (2) for the measurement of a current ($I_{\alpha\beta}$) on the stator, and a control unit, said asynchronous machine being configured to carry out the method according to one of the preceding claims.

**Revendications**

1. Procédé de commande et de régulation d'une machine asynchrone qui comprend un rotor et un stator, d'après lequel on détermine des grandeurs d'état électromagnétiques de la machine asynchrone au moyen d'un modèle mathématique selon une représentation vectorielle spatiale,
d'après lequel on prescrit par une commande de vitesse de rotation (4), une valeur de consigne pour le vecteur d'une tension de réglage $\left( V_{\alpha\beta}^* \right)$ au niveau du stator,
d'après lequel on mesure une valeur réelle du courant ($I_{\alpha\beta}$) au niveau du stator,
d'après lequel on détermine, à partir de la valeur de consigne pour le vecteur de la tension de réglage $\left( V_{\alpha\beta}^* \right)$ et de la valeur réelle du courant ($I_{\alpha\beta}$), un vecteur d'une tension d'induction ($E_{\alpha\beta}$),
d'après lequel on prescrit un vecteur d'une tension de correction $\left( V_{\alpha\beta}^c \right)$,
d'après lequel on détermine, à partir des vecteurs de la tension de correction $\left( V_{\alpha\beta}^c \right)$ et de la tension d'induction ($E_{\alpha\beta}$), une valeur estimée d'un vecteur du flux magnétique $\left( \varphi_{\alpha\beta}^s \right)$ au niveau du stator,
d'après lequel on prend en considération la valeur estimée du vecteur du flux magnétique $\left( \varphi_{\alpha\beta}^s \right)$ au niveau du stator pour prescrire le vecteur de la tension de correction $\left( V_{\alpha\beta}^c \right)$,
et d'après lequel on détermine, à partir de la valeur estimée du vecteur du flux magnétique $\left( \varphi_{\alpha\beta}^s \right)$, une valeur estimée d'un angle de phase ($\theta_s$) et une valeur estimée d'une fréquence de champ tournant ($\omega_s$),
**caractérisé**
**en ce que** l'on multiplie en supplément le vecteur de tension de correction $\left( V_{\alpha\beta}^c \right)$ par un facteur de modification de phase ($e^{i\gamma}$) au niveau du stator, lorsqu'une fraction produisant du couple d'un courant ($i_q$) au niveau du stator, présente un signe opposé à la valeur estimée de la fréquence de champ tournant ($\omega_s$), la fraction produisant du couple d'un courant ($i_q$) au niveau du stator étant déterminée à partir de la valeur réelle mesurée du courant ($I_{\alpha\beta}$) et de l'angle de phase ($\theta_s$) estimé.

2. Procédé selon la revendication 1, **caractérisé** **en ce que** l'on utilise en guise de facteur de multiplication supplémentaire de la tension de correction $\left( V_{\alpha\beta}^c \right)$, un facteur de phase ($e^{i\gamma}$) de la forme $e^{i\gamma}$.

3. Procédé selon la revendication 2, **caractérisé** **en ce que** l'angle de phase $\gamma$ dans le facteur de phase ($e^{i\gamma}$) est choisi égal à $\pi/2$ pour une valeur estimée s'évanouissant de la fréquence de champ tournant ($\omega_s$), et décroît de manière monotone avec une valeur absolue croissante de la valeur estimée de la fréquence de champ tournant ($\omega_s$).

4. Procédé selon la revendication 3, **caractérisé** **en ce que** l'angle de phase $\gamma$ dans le facteur de phase ($e^{i\gamma}$) présente une relation fonctionnelle par rapport à la valeur estimée de la fréquence de champ tournant ($\omega_s$), qui est donnée par

$$\gamma = \frac{\pi}{2}\frac{c - |\omega_s|}{c} \quad pour \ \ 0 \le |\omega_s| \le c,$$

$$\gamma = 0 \;\; pour \;\; |\omega_s| > c$$

c étant une valeur de seuil prescrite.

5. Procédé selon la revendication 3, **caractérisé en ce que** l'angle de phase $\gamma$ tend asymptotiquement vers zéro avec la valeur absolue croissante de la valeur estimée de la fréquence de champ tournant ($\omega_s$).

6. Procédé selon l'une des revendications précédentes, **caractérisé en ce que** l'on détermine le vecteur de la tension d'induction ($E_{\alpha\beta}$) à partir de la valeur de consigne pour le vecteur de la tension de réglage $\left(V_{\alpha\beta}^{*}\right)$ à laquelle on soustrait le produit de la résistance de stator ($R_s$) par une grandeur de courant dérivée de la valeur réelle du vecteur du courant ($I_{\alpha\beta}$).

7. Procédé selon l'une des revendications précédentes, **caractérisé en ce que** l'on détermine la valeur estimée du vecteur du flux magnétique $\left(\varphi_{\alpha\beta}^{s}\right)$ par intégration de la somme des vecteurs de la tension de correction $\left(V_{\alpha\beta}^{c}\right)$ et de la tension d'induction ($E_{\alpha\beta}$).

8. Procédé selon l'une des revendications précédentes, **caractérisé en ce que** l'on détermine la valeur estimée de l'angle de phase ($\theta_s$) en tant qu'angle de phase de la valeur estimée du vecteur du flux magnétique $\left(\varphi_{\alpha\beta}^{s}\right)$, et la valeur estimée de la fréquence de champ tournant ($\omega_s$) est dérivée d'une variation dans le temps de la valeur estimée de l'angle de phase ($\theta_s$).

9. Procédé selon l'une des revendications précédentes, **caractérisé en ce qu**'une valeur de consigne est prescrite par la commande de vitesse de rotation (4), pour le flux magnétique $\left(\varphi_{\alpha\beta}^{s}\right)$, et en ce que le vecteur de la tension de correction $\left(V_{\alpha\beta}^{c}\right)$ est prescrit par

$$V_{\alpha\beta}^{c} = G \cdot \left(e^{i\theta_s} \cdot \varphi_{d}^{*} - \varphi_{\alpha\beta}^{s}\right),$$

$\varphi_{\alpha\beta}^{s}$ étant la valeur estimée du vecteur du flux magnétique $\left(\varphi_{\alpha\beta}^{s}\right)$, $e^{i\theta_s}$ la phase associée à la valeur estimée de l'angle de phase ($\theta_s$), et G un facteur d'amplification de valeur réelle.

10. Machine asynchrone comprenant un rotor, un stator, une unité de mesure (2) pour mesurer un courant ($I_{\alpha\beta}$) au niveau du stator, et une unité de commande qui est conçue pour mettre en oeuvre le procédé selon l'une des revendications précédentes.

Fig. 1

$$\dot{i}_q \cdot \omega_s \geq 0: \qquad \gamma = 0$$

$$\dot{i}_q \cdot \omega_s < 0:$$

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **HOLTZ, J. ; QUAN, J.** Drift- and parametercompensated flux estimator for persistant zero-stator-frequency operation of sensorless-controlled induction motors. *IEEE Transactions on Industry Applications,* 2003, vol. 39 (4

- **HOLTZ, J ; QUAN, J.** Sensorless vercotr control of induction motors at very low speed using a nonlinear inverter model and parameter identification. *Conference record of the IEEE industry applications conference. 36th IAS annual meeting,* vol. 4, 2614-262